Europäisches Patentamt

European Patent Office

Office européen des brevets

(11) Veröffentlichungsnummer: **0 012 370**
A1

# (12) EUROPÄISCHE PATENTANMELDUNG

(21) Anmeldenummer: 79104960.4

(22) Anmeldetag: 06.12.79

(51) Int. Cl.³: **C 08 G 18/67, C 09 D 3/72, C 09 J 3/16, H 01 B 3/30**

(30) Priorität: 15.12.78 DE 2854192

(43) Veröffentlichungstag der Anmeldung: 25.06.80
Patentblatt 80/13

(84) Benannte Vertragsstaaten: **BE CH DE FR GB IT NL SE**

(71) Anmelder: **BASF Aktiengesellschaft,
Carl-Bosch-Strasse 38, D-6700 Ludwigshafen (DE)**

(72) Erfinder: **Kovacs, Jenoe, Dr., Dipl.-Chem.,
Robert-Koch-Strasse 18,
D-6712 Bobenheim-Roxheim 2 (DE)**

(54) **Polyurethan-Lösungen oder -Dispersionen, Verfahren zu ihrer Herstellung sowie ihre Verwendung.**

(57) Die Erfindung betrifft Polyurethan-Lösungen oder -Dispersionen, Verfahren zu ihrer Herstellung sowie ihre Verwendung. Diese Polyurethan-Lösungen oder -Dispersionen bestehen aus im wesentlichen

30 bis 80 Gewichtsprozent mindestens eines Lösungsmittels oder Dispersionsmittels und
70 bis 20 Gewichtsprozent eines Reaktionsproduktes aus
80 bis 10 Gewichtsprozent mindestens eines hydroxylgruppenhaltigen Polyesters oder Polyäthers mit einer Hydroxylzahl oberhalb von 20 und
5 bis 60 Gewichtsprozent mindestens einer Hydroxylverbindung mit einer Acetylen- und/oder Vinylgruppe und
10 bis 70 Gewichtsprozent eines Di- und/oder Polyisocyanats.

Ihre Herstellung erfolgt in organischem Lösungsmittel, das gegebenenfalls nach Zusatz von dispergiermittelhaltigem Wasser entfernt wird.

Die erfindungsgemäßen Polyurethan-Lösungen oder -Dispersionen eignen sich zur Herstellung von flächigen Überzügen, zum Lackieren von Drähten, als Mehrschichtklebstoffe und zur Herstellung von Pulverlacken.

Polyurethan-Lösungen oder -Dispersionen, Verfahren zu ihrer Herstellung sowie ihre Verwendung

Die vorliegende Erfindung betrifft Polyurethan-Lösungen und Dispersionen, ihre Herstellung und ihre Verwendung.

Es ist bekannt, Polyurethane, die aus hydroxylgruppenhaltigen Polyestern und Isocyanaten in Lösung oder Dispersion hergestellt werden, zur Herstellung von Überzügen oder Drahtlacken zu verwenden (DE-AS 17 29 201 und DE-OS 25 37 207).

Alle diese Polyurethan-Beschichtungsmittel haben den Nachteil, daß sie entweder noch freie Isocyanate enthalten, die bei der Lagerung sehr feuchtigkeitsempfindlich sind, oder daß sie Verkappungsmittel wie Kresole, Phenole, Maleinsäureester, Caprolactam usw. enthalten, die beim Einbrennen abgespalten werden und die Umwelt belasten.

Aufgabe der vorliegenden Erfindung ist es, in organischer und wäßriger Phase lagerstabile Polyurethan-Lösungen bzw. -Dispersionen aufzuzeigen, die keine die Umwelt belastenden Verkappungsmittel enthalten, und sich als vielseitig zu verwendende Beschichtungsmittel eignen.

Dies gelingt erfindungsgemäß dadurch, daß ein Acetylen- und/oder Vinylgruppen enthaltendes Polyurethan einer bestimmten Zusammensetzung als Lösung oder Dispersion hergestellt und verwendet wird.

Gegenstand der vorliegenden Erfindung sind Polyurethan-Lösungen oder -Dispersionen, die dadurch gekennzeichnet sind, daß sie im wesentlichen bestehen aus

Ls/Fe

A) 30-80 Gewichtsprozent mindestens eines Lösungsmittels oder Dispersionsmittels

B) 70-20 Gewichtsprozent eines Reaktionsproduktes aus

a) 80-10 Gewichtsprozent mindestens eines hydroxylgruppenhaltigen Polyesters oder Polyäthers mit einer Hydroxylzahl oberhalb von 20 und

b) 5-60 Gewichtsprozent mindestens einer Hydroxylverbindung mit einer Acetylen- und/oder Vinyl-Gruppe und

c) 10-70 Gewichtsprozent eines Di- und/oder Polyisocyanats.

Gegenstand der vorliegenden Erfindung ist außerdem ein Verfahren zur Herstellung der erfindungsgemäßen Polyurethan-Lösungen bzw. -Dispersionen, sowie deren Verwendung zur Herstellung von flächigen Überzügen, zum Lackieren von Drähten, zur Herstellung von Pulverlacken und als Mehrschichtklebstoffe.

Mit den erfindungsgemäßen Polyurethan-Lösungen bzw. -Dispersionen läßt sich die gestellte Aufgabe überraschenderweise sehr vorteilhaft lösen.

Erfindungsgemäß wird ein bestimmter Teil des hydroxylgruppenhaltigen Polyesters oer Polyäthers durch Hydroxylverbindungen mit Acetylen-, Vinyl- bzw. Allylgruppen ersetzt und die hydroxylgruppenhaltigen Komponenten in geeigneten Lösungsmitteln mit Di- und/oder Polyisocyanaten zur Reaktion gebracht.

Dabei spielen die Molverhältnisse der Ausgangskomponente eine wesentliche Rolle. Zur Herstellung von wäßrigen Dispersionen werden die Polyurethane aus den obengenannten Komponenten zunächst in niedrigsiedenden Lösungsmitteln gewonnen. Danach werden die Lösungen mit schutzkolloid- und/oder emulgatorhaltigem Wasser versetzt und das Lösungsmittel abdestilliert. Dabei erhält man je nach Dispergierungsgrad grobteilige oder feinteilige Dispersionen.

Zur Herstellung der erfindungsgemäßen Beschichtungsmittel werden Gemische aus hydroxylgruppenhaltigen Polyestern und/oder Polyäthern sowie beispielsweise Propargylalkohol und/oder Allylalkohol und deren Derivate mit Di- und/oder Triisocyanaten verwendet.

Es ist vorteilhaft, erst die acetylen- oder vinylgruppenhaltigen OH-Monomeren mit Isocyanaten umzusetzen, da die Isocyanate allgemein auf Gesamt-OH-Gruppen bezogen im Überschuß verwendet werden, wodurch einseitig verkappte Isocyanate entstehen. Die dabei freibleibenden Isocyanatgruppen werden danach mit den OH-Gruppen der hydroxylgruppenhaltigen Polyester und/oder Polyäther zur Reaktion gebracht. Die Abnahme der Isocyanatgruppen während der Reaktion kann titrimetrisch verfolgt werden. Die Reaktion wird im allgemeinen in einem Temperaturbereich zwischen Zimmertemperatur und +150°C je nach verwendetem Lösungsmittel innerhalb von 0,5 bis 20 Stunden ausgeführt. Wenn der Isocyanatgehalt unter 0,5 % gefallen ist, gilt die Reaktion als beendet. Danach kann die Einstellung der gewünschten Viskosität der Lösungen oder die Herstellung von organischen oder wäßrigen Dispersionen erfolgen. Um die Reaktion zwischen OH-Gruppen und Isocyanaten zu beschleunigen, ist es vorteilhaft, Beschleuniger in einer Konzentration von 0,1 bis 2,0 % einzusetzen. Geeignete Beschleuniger sind im allgemeinen sekundäre und tertiäre Amine.

Hinsichtlich der Aufbaukomponenten für die erfindungsgemäßen Polyurethan-Lösungen bzw. -Dispersionen ist im einzelnen folgendes auszuführen.

(A) Als Lösungsmittel kommen in Frage organische Lösungsmittel, wie Äther, Ester und Ätherester, z.B. Tetrahydrofuran, Dioxan, Essigester, Äthylglykolacetat, Halogenkohlenwasserstoffe, wie Methylenchlorid sowie vorzugsweise polare Lösungsmittel, wie Dimethylformamid, Dimethylacetamid, $\gamma$-Butyrolacton, N-Methylpyrrolidon, Ketone, wie Methyläthylketon, Cyclohexanon, sowie deren Gemische.

Als Dispergiermittel eignen sich unpolare organische Lösungsmittel, wie Xylole,
Benzinfraktionen und
Cycloaliphaten
sowie insbesondere Wasser.

Komponente (A) ist in den erfindungsgemäßen Polyurethan-Lösungen bzw. -Dispersionen in Mengen von 30 bis 80, vorzugsweise 50 bis 70 Gewichtsprozent enthalten.

(B) Als das Reaktionsprodukt (B) aufbauende Komponenten kommen in Frage:

a) und c): Als hydroxylgruppenhaltige Polyester und/oder Polyäther, sowie als Di- und Polyisocyanate kommen die zur Herstellung von Polyurethan üblichen Ausgangsstoffe in Frage. Einzelheiten über diese Stoffe, ihre Herstellung und Eigenschaften finden sich beispielsweise in dem Kapitel "Polyurethane"

0012370

in Houben-Weyl, Methoden der organischen Chemie, Band XIV/2 (1963), Seiten 77 bis 98.

Bevorzugte Polyester sind: Umsetzungsprodukte aus aliphatischen oder aromatischen Dicarbonsäuren, wie Adipinsäure, Terephthalsäure, Isophthalsäure, Phthalsäure oder Azelainsäure bzw. deren Derivate mit vorzugsweise aliphatischen Diolen, wie Äthylenglykol, Diäthylenglykol, Triäthylenglykol, Neopentylglykol, wobei vorzugsweise als Vernetzer höherwertige Alkohole, wie Trimethylolpropan, Glyzerin, Trimethylolbenzol oder Trishydroxyäthylisocyanurat mitverwendet werden. Als Polyäther kommen z.B. in Frage: Polyäthylenglykol, Polypropylenglykol oder Polytetrahydrofuran.

Die Hydroxylzahlen der Polyester oder Polyäther sind größer als 20, vorzugsweise liegen sie zwischen 50-600, insbesondere 100-500. Sie haben im allgemeinen ein Molekulargewicht von vorzugsweise 500 bis 5000, insbesondere von 1000 bis 2000.

Als Di- und Polyisocyanate kommen beispielsweise in Frage: Hexamethylendiisocyanat, 4,4'-Diphenylmethandiisocyanat, Toluylendiisocyanat, Isophorondiisocyanat, Naphthalindiisocyanat sowie höherkondensierte Produkte, wie das Trimerisationsprodukt von Toluylendiisocyanat oder das Umsetzungsprodukt aus 1 Mol Trimethylolpropan und 3 Mol Toluylendiisocyanat.

Vorzugsweise geeignet sind Polyisocyanate auf Basis von aromatischen Polyisocyanaten mit einem Isocyanatgehalt zwischen 5 und 60 %.

Komponente (a) wird in Mengen von 80 bis 10, vorzugsweise 70 bis 20 Gewichtsprozent, Komponente c) in Mengen von 10 bis 70, vorzugsweise 20 bis 50 Gewichtsprozent als Aufbaukomponente des Reaktionsproduktes (B) eingesetzt.

b) Als Hydroxylverbindungen mit Acetylen- oder Vinylgruppen kommen Monomere, wie z.B. Propargylalkohol und/oder Allylalkohol oder deren Derivate wie z.B. Butin-1-ol-3, 3-Methylpentin-1-ol-3, 3-Äthylpentin-1-ol-3, 3-Propylhexin-1-ol-3 oder 1-Äthinylcyclohexanol in Frage. Die OH-Zahl solcher Monomerer liegt zwischen 200-1100, vorzugsweise zwischen 400 und 1000.

Das Molverhältnis (Grundmol) von hydroxylgruppenhaltigen Polyestern zu Acetylen- und/oder Vinylverbindungen liegt zwischen 2:5 und 5:2.

Als Beschleuniger für die Urethanbildung kommen überwiegend tertiäre Amine wie Dimethylbenzylamin, Pentamethyldiäthylamin oder Zinnverbindungen wie beispielsweise Dibutylzinndilaurat in einer Konzentration von 0,1-2,0, bevorzugt 0,2 bis 0,5 Gewichtsprozent bezogen auf OH-Verbindungen zum Einsatz.

Die Gewichtsverhältnisse von hydroxylgruppenhaltigen Polyestern und/oder Polyäthern, Acetylen- bzw. Allyl-Verbindungen sowie Polyisocyanaten liegen zwischen 80-10 Gewichtsprozent (a), 5-60 Gewichtsprozent (b) und 10-70 Gewichtsprozent (c).

Die Molverhältnisse zwischen Gesamt-OH-Gruppen und Isocyanaten liegen zwischen 0,5-1,5 zu 1,5-0,5, bevorzugt 1:1.

Als Dispersionsmittel zur Herstellung von organischen Poly-
urethan-Dispersionen kommen allgemein verschiedene höhersiedende Benzinfraktionen sowie Xylole und höhersiedende
Cycloaliphaten in Frage.

Zur Herstellung von wäßrigen Dispersionen verwendet man
als Reaktionsmedium vorteilhafterweise niedrigsiedende
Lösungsmittel wie beispielsweise Methyläthylketon, Toluol,
Methylenchlorid, Essigester, Tetrahydrofuran, Dioxan und
ähnliche. Die Feststoffgehalte dieser Polyurethan-Lösungen liegen bei 10-60 %, vorzugsweise 20-40 %.

Die erfindungsgemäßen wäßrigen Dispersionen enthalten zweckmäßigerweise noch 0,1 bis 15 Gewichtsprozent üblicher Dispergierhilfsmittel, vorzugsweise wasserlösliche, hochmolekulare, organische Verbindungen, wie z.B. Polyvinylalkohole
mit Restacetatgruppen bis zu 30 Molprozent, Polyvinylpyrrolidone, Copolymerisate aus Vinylpropionat und Vinylpyrrolidon, Polyacrylsäuren, teilverseifte Copolymerisate
aus Acrylestern und Acrylnitril, Celluloseäther, Gelatine
oder Mischungen dieser Stoffe.

Emulgatoren, die zusätzlich zu Schutzkolloiden verwendet
werden können, sind beispielsweise oberflächenaktive nichtionische Verbindungen wie $C_7$-$C_{15}$-Alkohole umgesetzt mit
5-12 Äthylenoxideinheiten.

Darüber hinaus können übliche Zusatzstoffe wie Füllstoffe,
Verlaufmittel, Verdickungsmittel, Neutralisationsmittel,
Antithixotropiermittel den erfindungsgemäßen Polyurethan-
-Lösungen bzw. -Dispersionen in Mengen bis zu 40 Gewichtsprozent einverleibt werden. Diese Zusatzstoffe können bereits den Ausgangslösungen oder auch erst der fertigen
Dispersion, sofern wasserlöslich oder wasserdispergierbar, zugesetzt werden.

Ein bevorzugtes Herstellungsverfahren besteht auch darin, daß die hydroxylgruppenhaltigen Polyester und/oder Polyäther zusammen mit den hydroxylgruppenhaltigen Acetylen- und/oder Vinylverbindungen zusätzlich in einem inerten Lösungsmittel gelöst werden und die Lösung dann mit dem Di- oder Polyisocyanat versetzt wird. Die Reaktion zwischen OH-Gruppen und Isocyanatgruppen beginnt je nach OH-Verbindungen bei Zimmertemperatur. Beim Einsatz von beispielsweise Propargylalkohol oder Allylalkohol erfolgt die Reaktion bereits bei 20°C. Zur vollständigen Umsetzung der OH-Gruppen der OH-Polyester kann die Temperatur bis zum Siedepunkt des Lösungsmittels erhöht werden. Die Abnahme des Isocyanatgehaltes wird durch Titration verfolgt. Wenn der Isocyanatgehalt unter 0,5 Gewichtsprozent sinkt, gilt die Reaktion als beendet.

Zur Herstellung von Dispersionen wird die Lösung danach z.B. bis auf +40°C abgekühlt und unter starkem Rühren mit schutzkolloidhaltigem und/oder emulgatorhaltigem Fällungsmittel oder Wasser versetzt. Es entsteht eine Emulsion. Die Temperatur bei der Rückgewinnung des Lösungsmittels soll +100°C nicht überschreiten, da darüber eine vorzeitige Polymerisation der Acetylen- oder Vinylverbindungen erfolgen kann. Gegebenenfalls arbeitet man unter vermindertem Druck. Bei der Rückgewinnung des Lösungsmittels ist es vorteilhaft mit Rührern und Stromstörern zu arbeiten. Die Umlaufgeschwindigkeit der Rührer soll dabei zweckmäßigerweise 50-500 m/min, vorzugsweise 100-400 m/min erreichen. Dabei spielt auch die Form des Rührers eine Rolle.

Die maximale Korngröße der Dispersion liegt unter 5 um, der mittlere Durchmesser liegt zwischen 0,05 und 2 um. Gegebenenfalls können die Dispersionsteilchen mit den üblichen Rührwerkskugelmühlen zerkleinert werden.

Die Dispersionen haben ausgezeichnete Lagerstabilität. Sie sind geeignet um dünne (2-4 $\mu$) Überzüge auf Kupferdrähten zu erzeugen, die sehr gute mechanische, elektrische und thermische Eigenschaften aufweisen. Besonders die Bleistifthärte, der Erweichungspunkt und die Verzinnbarkeit der Lackierungen sind hervorzuheben. Trotz hoher Vernetzungsdichte verschlechtert sich die Elastizität der Überzüge nicht.

Die erfindungsgemäßen Lacklösungen oder Dispersionen werden vorteilhaft zur Beschichtung flächigen Substraten verschiedener Art, insbesondere von Metalloberflächen oder von elektrischen Leitern verwendet. Zur Herstellung von Überzügen werden die Lösungen auf Spritz- oder Gießviskosität gebracht und mit entsprechenden Geräten appliziert. Bei der Drahtlackierung werden die Lösungen oder Dispersionen in üblichen Drahtlackiermaschinen mit mehrmaligem Eintauchen der Drähte und anschließendem Abstreifen aufgebracht und bei höheren Temperaturen wie 250-550°C eingebrannt. Dabei findet eine thermische Polymerisation der Mehrfachbindungen statt. Zur Beschleunigung der Vernetzung ist es möglich radikalbildende Katalysatoren, beispielsweise Peroxide oder Azoverbindungen einzusetzen. Die Konzentration der Radikalbildner liegt bei 0,2-5 %, vorzugsweise 0,5 bis 2,0 %.

Weitere vorteilhafte Verwendungsmöglichkeiten der erfindungsgemäßen Polyurethanlösungen bzw. -Dispersionen sind Mehrfachschichtklebstoffe und Pulverlacke. Letztere lassen sich beispielsweise aus den erfindungsgemäßen Polyurethan-Lösungen oder -Dispersionen durch Sprühtrocknung oder Gefriertrocknung erhalten.

Die in den Beispielen angegebenen Teile und Prozente sind, soweit nicht anders angegeben Gewichtsteile und Gewichtsprozente.

## Beispiel 1

In einem Rührkolben mit Destillationsaufsatz werden 20,6 Teile Propargylalkohol mit 125 Teilen eines Polyesters aus Adipinsäure, Phthalsäureanhydrid, Trimethylolpropan und Propylenglykol-1,2 mit einer Hydroxylzahl von 165 in 489,3 Teilen Äthylglykolacetat gelöst. Die Lösung wird anschließend mit 64,1 Teilen Toluylendiisocyanat und 0,5 Teilen Dimethylbenzylamin versetzt. Die Reaktion setzt sofort ein. Nach Abklingen der Reaktion wird die Temperatur auf $70^{\circ}C$ erhöht. Nach 6-stündiger Reaktionszeit erreicht der Isocyanatgehalt 0,1 Gewichtsprozent. Die Temperatur wird danach auf $40^{\circ}C$ gesenkt. Diese Lösung wird dann mit Solvesso 100 auf 20 % Feststoff verdünnt.

Auf eine Glasplatte wird ein 50 µm starker Film gegossen und bei $200^{\circ}C$ 15 Minuten eingebrannt. Die Flexibilität, Klarheit und die Bleistifthärte des Überzuges sind ausgezeichnet (4-5 H). Beschichtungen auf Stahlblech zeigen eine Pendelhärte von 75 (s) und einen guten Gitterschnitt. Der Erichsenwert liegt bei 8,5 mm.

## Vergleichsbeispiel zu Beispiel 1

Beispiel 1 wird wiederholt, anstatt Propargylalkohol wird jedoch die gleiche molare Konzentration von n-Propanol zugeführt. Nach Ausführung der Reaktion in Methyläthylketon und Dispergierung erhält man eine Dispersion, die bei 30 %igem Feststoffgehalt eine Durchlaufzeit von 16 Sekunden (gemessen im DIN4-Becher) aufweist.

Mit der Dispersion werden 0,5 mm Kupferdrähte bei $430^{\circ}C$ lackiert. Die Lackdrähte weisen spröde Eigenschaften auf. Eine weitere Prüfung der Drähte war daher unmöglich.

## Beispiel 2

In einem Rührkolben mit Destillationsaufsatz werden 340,4 Teile eines Polyesters aus Phthalsäureanhydrid und Trimethylolpropan mit einer Hydroxylzahl von 400 sowie 53,25 Teile Propargylalkohol in 1600 Teilen Methyläthylketon gelöst. Die Lösung wird anschließend mit 292,16 Teilen Toluylendiisocyanat versetzt. Durch die Reaktion zwischen Toluylendiisocyanat und Propargylalkohol erhöht sich die Temperatur der Lösung auf $32^\circ$C. Nach Beendigung der Reaktion werden 1,78 Teile Dimethylbenzylamin als Beschleuniger zugeführt. Die Temperatur wird danach auf $70^\circ$C eingestellt. Nach 8-stündiger Reaktionszeit sinkt der Isocyanatgehalt der Lösung auf 0,5 %. Dann wird die Temperatur auf $40^\circ$C gesenkt und die Lösung unter starkem Rühren mit 685,9 Teilen einer 5%igen wäßrigen Lösung eines Polyvinylalkohols mit einer Viskosität von 5 cP (in 2 %iger wäßriger Lösung), einer Hydroxylzahl von 653 und einem Restacetatgehalt von 27 % sowie mit 2,29 Teilen eines $C_{13}$-Alkohols mit 6-8 Mol Äthylenoxid umgesetzt, versetzt.

Es entsteht eine Emulsion. Die Innentemperatur des Kolbens wird innerhalb von 3 Stunden auf $95^\circ$C gesteigert. Dabei werden insgesamt 1600 Teile Flüssigkeit abdestilliert. Die Innentemperatur des Kolbens wird danach auf $40^\circ$C gesenkt und die Lösung mit 914,5 Teilen einer 5 %igen Lösung eines Copolymerisats aus Vinylpropionat und Vinylpyrrolidon auf ca. 30 % verdünnt. Die Dispersion hat eine Durchlaufzeit von 22 sec im DIN$^4$-Becher.

Mit der Dispersion werden 0,5 mm Kupferdrähte auf einer Maschine mit 2,5 m Länge bei $430^\circ$C mit einer Lackiergeschwindigkeit von 20-24 m/min beschichtet. Eigenschaften der lackierten Drähte:

| Durchmesserzunahme | : | 35-40 um |
| Hitzeschockbeständigkeit (DIN 46 453) | : | 185°C |
| Lötzeit (DIN 46 416) | : | 1,5-2,0 sec |
| Erweichungspunkt (DIN 53 180) | : | 220-240°C |
| Bleistifthärte (DIN 46 453) | : | 5-6 H |

## Beispiel 3

In einem Rührkolben mit Destillationsaufsatz werden 479,5 Teile eines Polyesters aus Adipinsäure, Butandiol--1,4 und Trimethylolpropan mit einer Hydroxylzahl von 395 sowie 77,7 Teile Allylalkohol in 2261 Teilen Tetrahydrofuran gelöst. Die Lösung wird danach unter Erwärmen mit 411,5 Teilen Toluylendiisocyanat und 2,5 Teilen Dimethylbenzylamin versetzt. Die Temperatur wird danach 6 Stunden auf 75°C erhöht. Dabei findet die Umsetzung statt. Die NCO-Zahl sinkt auf 0,3 %. Anschließend wird die Temperatur auf 35°C gesenkt.

Unter starkem Rühren wird der Kolbeninhalt mit 968,7 Teilen einer 5 %igen wäßrigen Lösung eines Polyvinylalkohols mit einer Viskosität von 5 cP (in 2 %iger wäßriger Lösung), einer Hydroxylzahl von 653 und einem Restacetatgehalt von 27 % sowie mit 32,3 Teilen eines $C_{13}$-Alkohols mit 6-8 Mol Äthylenoxid umgesetzt, versetzt. Die Temperatur der entstandenen Emulsion wird innerhalb von 3 Stunden auf 99°C gesteigert.

Dabei werden insgesamt 2532 Teile Destillat zurückgewonnen. Die Innentemperatur des Kolbens wird danach auf 35°C gesenkt und die Lösung mit 1292 Teilen einer 5 %igen Lösung eines Copolymerisats aus Vinylpropionat und Vinylpyrroli-

0012370

äon auf 30 % verdünnt. Die Dispersion hat eine Durchlaufszeit von 16 sec (gemessen im DIN⁴-Becher).

Um die Feinheit der Dispersion zu erhöhen wird die Dispersion in einer Rührwerkskugelmühle mit 6 Passagen gemahlen. Die maximale Teilchengröße liegt bei 3/u.

Mit der Dispersion werden 0,5 mm starke Kupferdrähte auf einer üblichen horizontalen Drahtlackiermaschine (2,5 mm Länge) mit einer Lackiergeschwindigkeit von 18-24 m/min und bei einer Ofentemperatur von 430°C beschichtet. Eigenschaften der lackierten Drähte:

| Durchmesserzunahme | : 30-35/u |
| Hitzeschockbeständigkeit (DIN 46 453 | : 155°C |
| Lötzeit bei 375°C (DIN 46 416) | : 2,0-2,5 sec |
| Erweichungspunkt (DIN 53 180) | : 200-220°C |
| Bleistifthärte (DIN 46 453) | : 4-5 H |

## Patentansprüche

1. Polyurethan-Lösungen oder -Dispersionen, dadurch gekennzeichnet, daß sie im wesentlichen bestehen aus

   A)  30-80 Gewichtsprozent mindestens eines Lösungsmittels oder Dispersionsmittels

   B)  70-20 Gewichtsprozent eines Reaktionsproduktes
       aus

   a)  80-10 Gewichtsprozent mindestens eines hydroxylgruppenhaltigen Polyesters oder Polyäthers mit
       einer Hydroxylzahl oberhalb von 20 und

   b)  5-60 Gewichtsprozent mindestens einer Hydroxylverbindung mit einer Acetylen- und/oder Vinylgruppe
       und

   c)  10-70 Gewichtsprozent eines Di- und/oder Polyisocyanats.

2. Polyurethan-Lösungen oder -Dispersionen nach Anspruch 1,
   dadurch gekennzeichnet, daß die Komponente A ein polares Lösungsmittel ist.

3. Polyurethan-Lösungen oder -Dispersionen nach Anspruch 1,
   dadurch gekennzeichnet, daß die Komponente A ein unpolares Dispersionsmittel ist.

4. Polyurethan-Lösungen oder Dispersionen nach Anspruch 1
   oder 2, dadurch gekennzeichnet, daß die Komponente (A)
   Wasser ist.

5. Polyurethan-Lösungen oder Dispersionen nach einem der
   vorhergehenden Ansprüche, dadurch gekennzeichnet, daß
   die Komponente (B) a) ein Polyester aus einer alipha- tischen oder aromatischen Dicarbonsäure, einem aliphatischen Diol und gegebenenfalls einem mehrwertigen Alkohol mit einer Hydroxylzahl zwischen 25 und 600 und einem Molgewicht von 500 bis 5000 ist.

6. Polyurethan-Lösungen oder -Dispersionen nach einem der vorhergehenden Ansprüche, dadurch gekennzeichnet, daß die Komponente B a) ein aliphatischer Polyäther mit einer Hydroxyzahl zwischen 25 und 600 ist.

7. Polyurethan-Lösungen oder -Dispersionen nach einem der vorhergehenden Ansprüche, dadurch gekennzeichnet, daß die Komponente B b) eine aliphatische Hydroxylverbindung mit Acetylen- und/oder Doppelbindung mit einer OH-Zahl von 200 bis 1100 ist.

8. Polyurethan-Lösungen oder -Dispersionen nach einem der vorhergehenden Ansprüche, dadurch gekennzeichnet, daß die Komponente B c) ein aliphatisches, cycloaliphatisches oder aromatisches Di- oder Polyisocyanat mit einem Isocyanatgehalt von 5-60 % ist.

9. Verfahren zur Herstellung der Polyurethan-Lösungen oder Dispersionen nach Anspruch 1, dadurch gekennzeichnet, daß als Lösungs- oder Dispersionsmittel mindestens ein organisches Lösungsmittel verwendet wird.

10. Verfahren zur Herstellung von Polyurethan-Dispersionen nach Anspruch 1 oder 4, dadurch gekennzeichnet, daß eine 10 bis 80 gewichtsprozentige Lösung der Komponente (B) in einem inerten organischen Lösungsmittel mit einem Siedepunkt unter 150°C mit Wasser, das Dispergierhilfsmittel enthält, vermischt wird und das inerte organische Lösungsmittel bei Temperaturen unter 100°C entfernt wird.

11. Verfahren zur Herstellung von Polyurethan-Dispersionen nach Anspruch 10, dadurch gekennzeichnet, daß während der Entfernung des inerten organischen Lösungsmittels das Gemisch gerührt oder anderweitig Scherkräften unterworfen wird.

12. Verfahren zur Herstellung von Polyurethan-Dispersionen nach Anspruch 10 oder 11, dadurch gekennzeichnet, daß als Dispergierhilfsmittel organische Homo- und/oder Copolymere sowie niedermolekulare Emulgatoren verwendet werden.

13. Verwendung der Polyurethan-Lösungen oder -Dispersionen nach einem der vorhergehenden Ansprüche, zur Herstellung von flächigen Überzügen.

14. Verwendung der Polyurethan-Lösungen oder -Dispersionen nach einem der vorhergehenden Ansprüche zum Lackieren von Drähten.

15. Verwendung der Polyurethan-Lösungen oder -Dispersionen nach einem der Ansprüche 1 bis 13 als Mehrschichtklebstoffe.

16. Verwendung der Polyurethan-Lösungen oder -Dispersionen nach einem der Ansprüche 1 bis 12 zur Herstellung von Pulverlacken.

**Europäisches Patentamt**

**EUROPÄISCHER RECHERCHENBERICHT**

0012370

Nummer der Anmeldung

EP 79 10 4960

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 343 768 (THE UPJOHN CO)<br>* Seiten 19,20; Ansprüche 1,4-8; Seite 6, Zeilen 14-27; Seite 7, Zeilen 19-29; Seite 10, Zeile 39 bis Seite 11, Zeile 26 * | 1-3,5-9,13-16 |
| | -- | |
| | FR - A - 2 325 690 (GOODYEAR)<br>* Seiten 13,14; Ansprüche 1,8,9; Seite 1, Zeilen 31-36; Seite 10, Zeilen 17-25 * | 1,10 |
| | -- | |
| D | FR - A - 2 321 529 (BASF)<br>* Seite 9; Ansprüche 1,5,6,8,12 *<br>& DE - A - 2 537 207 | 1,10-12,14 |
| | ---- | |

**KLASSIFIKATION DER ANMELDUNG (Int.Cl. 3)**

C 08 G 18/67
C 09 D 3/72
C 09 J 3/16
H 01 B 3/30

**RECHERCHIERTE SACHGEBIETE (Int. Cl. 3)**

C 08 G 18/67
        18/28
        18/81
        18/08
C 08 J 3/10
H 01 B 3/30

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-02-1980 | V. PUYMBROECK |

EPA form 1503.1 06.78